Europäisches Patentamt

European Patent Office

Office européen des brevets

(19)

(11) Publication number: **0 133 930**
A2

## EUROPEAN PATENT APPLICATION

(21) Application number: **84108147.4**

(22) Date of filing: **11.07.84**

(51) Int. Cl.⁴: **A 63 F 9/22**

(30) Priority: **29.07.83 US 518679**

(43) Date of publication of application: **13.03.85**
**Bulletin 85/11**

(84) Designated Contracting States: **AT BE CH DE FR GB IT LI LU NL SE**

(71) Applicant: **MYLSTAR ELECTRONICS, INC., 165 West Lake Street, Northlake Illinois 60164 (US)**

(72) Inventor: **Waxman, Ronald A., 675 Judson Avenue, Highland Park, Illinois 60035 (US)**
Inventor: **Jacobs, William R., 2645 Greenleaf, Wilmette, Illinois 60091 (US)**

(74) Representative: **Schwabe, Hans-Georg, Dipl.-Ing. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)**

(54) Video game employing video disc generator.

(57) A video disc game generates objects on a video monitor (14) consisting of video data stored on a video disc (302) and video data generated by a computer graphics generator (34) of a computer system (32). Composite video information from the video disc (302) is separated into pictorial data and synchronization data, and the synchronization data is used to synchronize the clock (42) of the computer system (32). The composite video information is stored on the disc (302) in a video-frame by video-frame format. A game play program may be stored on the video disc (302), and the loaded into a random access memory of the computer system (32) and used to control game play.

# VIDEO GAME EMPLOYING VIDEO DISC GENERATOR

This invention relates generally to video games having a video monitor that is energized in response to player controls, and more particularly to a stored program controller and video disc storage system for such a video game.

Video games have become well-known forms of both arcade entertainment and home television entertainment. In video games, a cathode ray tube (CRT), such as a video monitor for arcade usage and such as a television for home usage, is energized to produce a plurality of images. At least one of the images is player controlled. Depending upon the particular theme of the game play, the player controlled object(s) interacts with non-player controlled objects.

The non-player controlled objects have been generated on the video screen in a number of ways. For example, analog circuit designs initially were employed for controlling the CRT. Later, digital circuit designs were employed to control the display on the CRT. The digital designs included computer (or CPU) designs employing stored program control of the object generation on the video screen. While such designs have generally been in connection with a raster-type scan of the video screen, vector scanning techniques have also been employed to control image generation.

One shortcoming of the known circuit designs for generating character on a video game screen has been in achieving design which allows a large number of nonplayer controlled objects to be generated on the video screen and changed, replaced and manipulated rapidly with a minimum of hardware and software expense. In particular, there is need for design which allows a large number of changing play fields and, ideally, design which allows changing background as part.of the game play.

The above noted and other shortcomings are overcome by the present invention by providing a video game machine having a video disc storage system with an addressable video disc containing composite video information and a CPU-state machine type controller which cooperate to produce on a video monitor background and foreground images generated by the CPU-state machine and additional background images generated from the video information on the video disc.

According to one aspect of the invention, the addressable video disc system provides data for generating background images on the video monitor. Composite video information is stored as video frequency information on a frame-by-frame format on a video disc. The disc revolves at a constant angular velocity (CAV) of 1800 revolutions per minute. One revolution of the disc corresponds to one frame of video, a single frame being a standard CAV video disc reference point. As will be apparent to those skilled in the art, as many as 54,000 addressable frames can be included on one side of a CAV video disc. The system may permit rapid access to all video frames, or it may permit rapid access to a relatively small number and somewhat slower access to the remainder.

According to another aspect of the present invention, the composite video information stored in a video-frame by video-frame format on the disc includes pictorial data and synchronization data. The pictorial data is used to generate background images, and the synchronization data is used to generate synchronization signals. The composite video information also includes in the form of a 24-bit biphase coded signal (Manchester-L) which appears as white directed pulses on various lines during the vertical blanking interval. This coded signal included in each frame of composite video information identifies a frame number pre-assigned to that video frame. The lines used during vertical blanking are generally lines number 16, 17, 18, 279, 280, and 281. The pulses extend generally from ElA (IRE) level 0% to ElA (IRE) level 100%, where 100% is the "white" level.

According to one embodiment of the present invention, a video game machine of the type having a stored program for generating an image of changing objects on a video monitor and having player operated controls for controlling movement of at least one of the changing objects, and of the type in which the stored program defines a background grid of relatively large zones on the monitor and defines a foreground grid of relatively smaller zones on the monitor, includes means responsive to the stored program for generating foreground and background images on the monitor which correspond to the foreground grid and the background grid, a video disc storage system having an addressable video disc containing information stored in a video-frame by video-frame format, each frame having composite video information including pictorial data and synchronization data, and means responsive to the stored program and the pictorial data and the synchronization data for generating additional background images on the monitor in synchronization with the foreground and background images generated by the CPU-state machine controller.

According to another aspect of the invention, means are provided responsive to the synchronization data for generating external vertical and horizontal synchronization signals. The external horizontal synchronization signal is compared to an internal clock signal, and the clock signal altered to eliminate phase and frequency differences between it and the external horizontal synchronization signal.

It is thus a general object of the present invention to provide a new and improved video game having access to tens of thousands of frames of video data which can be used in an interactive manner with player-controlled foreground objects.

The above and other features and advantages of the present invention will become apparent from reading the following detailed description of a preferred embodiment of the invention in connection with the appended drawings.

FIG. 1 is perspective view of a video game machine including its housing;

FIG. 2 is a functional block diagram of the video disc and controller logic for the video game of FIG. 1;

FIG. 3 is a functional block diagram of the serial interface employed in the diagram of FIG. 2;

FIG. 4 is a functional block diagram of the controller logic for the video game of FIG. 1;

FIG. 5 is a functional block diagram of the foreground generator employed in the diagram of FIG. 4; and

FIG. 6A is a functional block diagram of the background generator, and FIG. 6B is a functional block diagram of the video summer employed in the diagram of FIG. 4.

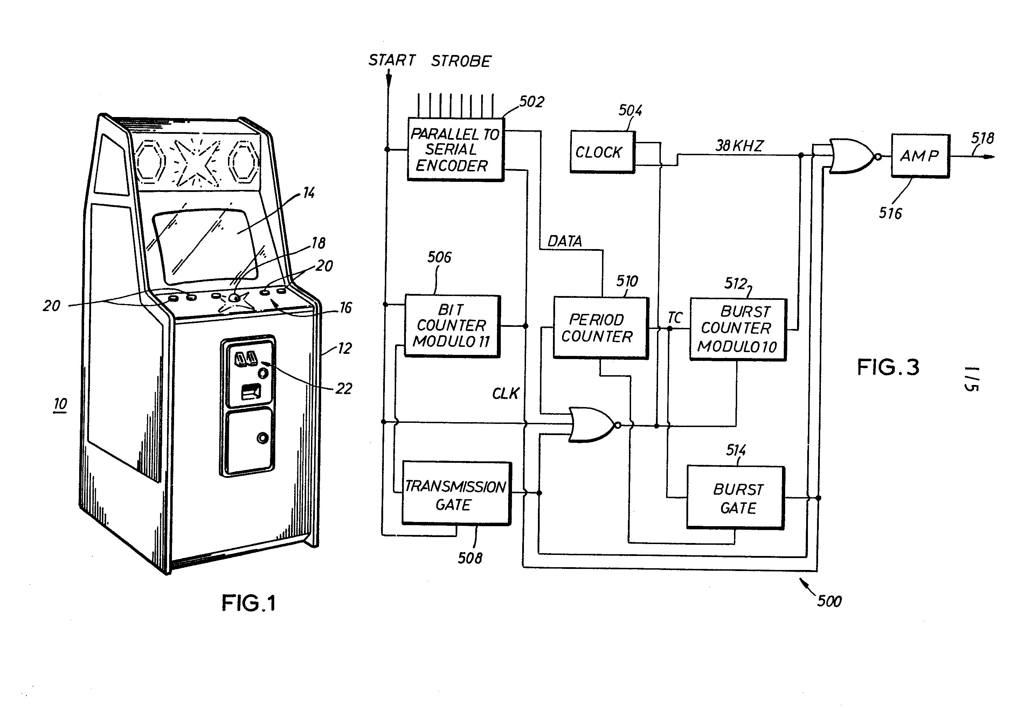

Referring now to the drawings, and in particular to FIG. 1, there is shown in perspective view a video game machine 10 according to the present invention. The video game machine 10 includes a cabinet 12 and a video monitor 14 supported by the cabinet 12. Several player operator controls 16 are provided in the form of a track ball 18 and a set of push-buttons switches 20, A coin mechanism 22 is supported on the cabinet 12 for receiving coins to enable game play.

In response to operation of the coin mechanism 22, an image-forming beam illuminates the video monitor 14 to form a plurality of moving images. At least one of the moving images is under the control of the player via the controls 16.

The video monitor 14 is preferably a raster-type scan cathode ray tube (CRT). Preferably, the CRT is a color kinescope having three guns in which the control grids or the cathodes can be driven with appropriate red, green and blue signals. If desired, the CRT may be a monochromatic kinescope. As will be apparent to those skilled in the art, any of a number of game themes can be employed using the present invention. Accordingly, a particular game theme will not be described as it is believed that the invention is readily understood in terms of the hardware to be described.

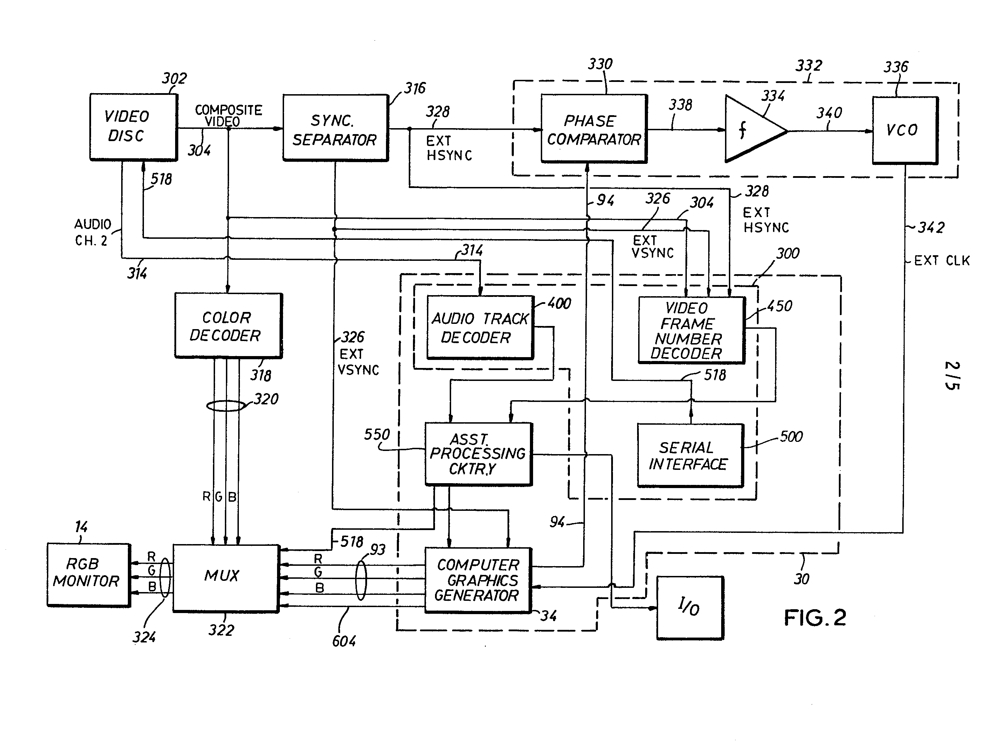

Referring now to FIG. 2, the video game machine 10 includes a controller 30 for controlling the image defining beam which energizes the video monitor 14. (For sake of simplicity, reference will be made to a single image defining beam even though there are three such beams in a three-gun color CRT and a single beam in a monochromatic CRT.)

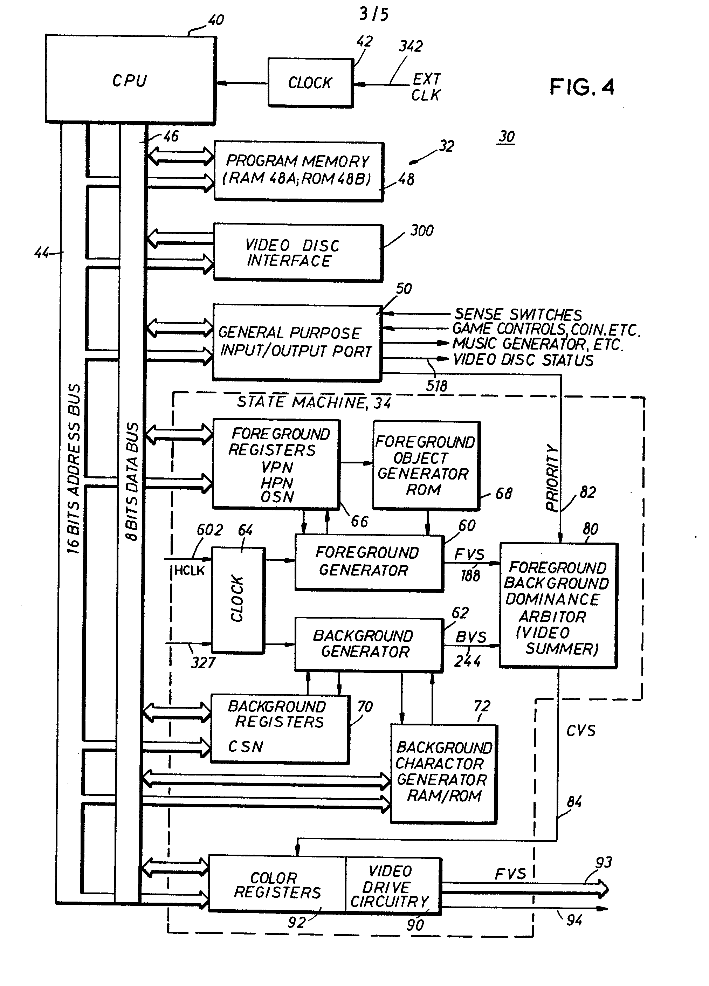

The controller 30 shown in phantom lines in FIG. 2 includes a computer system 32 and a computer graphics generator or state machine 34 best illustrated in FIG. 4. Also included is a video disc interface 300 (illustrated in phantom lines in FIG. 2), having an audio track decoder 400, a video frame number decoder 450, and a serial interface 500 (illustrated in greater detail in FIG. 3). With continued reference to FIG. 2, the controller 30 further includes assorted processing circuitry 550 illustrated in part in greater detail in FIGS. 4, 5, 6A and 6B.

The computer graphics generator or state machine 34 and certain parts of the controller 30 (excluding the video disc interface 300) are disclosed by Jun Yum in U.S. Patent Application Serial No. 438,247, filed on November 1, 1982, entitled "Video Game Controller and Method" and assigned to the assignee of the present application. The Yum application is incorporated herein by reference. The audio decoder 400 of the video disc interface 300 is disclosed in U.S. Patent Application Serial No. _____, filed on even date herewith, entitled "Video Disc Game Having Rapid Video Disc Search and Transfer" and assigned to the assignee of the present application. This application is also incorporated herein by reference.

With continued reference to FIG. 2, a video disc game according to the present invention includes a video disc 302 which is designed to operate at a constant angular velocity (CAV) on a conventional video disc player (not illustrated), such as a Pioneer VP-1000 Laserdisc player or a Pioneer PR-8210 Videodisc player. The CAV disc 302 revolves continuously at 1800 revolutions per minute, one revolution per frame of video information. Thus each frame of video on the CAV disc 302 is addressable, as will be apparent to those skilled in the art. A "frame" is two complete scans of a video screen at 1/30 second, and is composed of two "fields" and a retrace. There can be as many as 54,000 addressable frames on one side of a CAV video disc.

In operation, a laser beam reads data encoded on the optical video disc 302. In the case of a reflective disc, the laser beam is reflected off the shiny surface of the disc. In the case of a transmissive disc, the laser beam passes through the transparent surface of the disc.

The video disc 302 has encoded at video frequency rates composite video information including pictorial data, synchronization data, and pulse data. The pulse data is in the form of a 24-bit biphase coded signal (Manchester-L) appearing as white directed pulses on various lines during the vertical blanking interval, and identifies a unique frame number pre-assigned to each video frame. During operation, the laser beam reads the data encoded on the video disc and generates on a line 304 a composite video signal.

The line 304 couples the composite video signal to a sync separator 316 and to a color decoder 318. Using standard television circuitry, the color decoder 318 decodes the chrominance and luminance information from the composite video signal and produces red (R), green (G) and blue (B) signals on a line 320.

The RGB output of the decoder 318 is coupled to a multiplexor 322. The multiplexor 322 multiplexes the RGB signals it receives on the line 320 from the color decoder with RGB signals it receives on a line 93 from the computer graphics generator 34, and produces RGB signals that are coupled to the monitor 14 via a line 324. The multiplexing operation is controlled by a signal coupled to the multiplexor 322 from the generator 34 via a line 604.

With continued reference to the embodiment illustrated in FIG. 2, the composite video signal from the video disc 302 is asynchronous with the rest of the system, and in particular with the video produced by the computer graphics generator 34. The composite video on the line 304 is received by the sync separator 316 which separates from the composite video signal the horizontal and vertical synchronization signals that were encoded on the video disc 302.

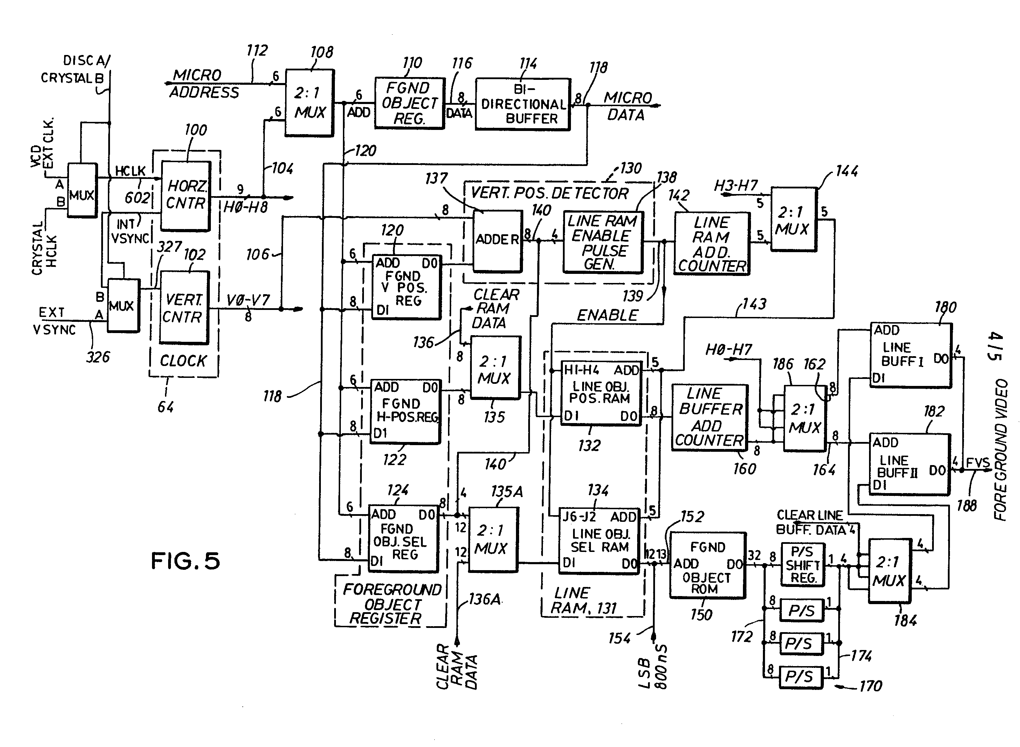

The sync separator 316 is of common design. It produces an external vertical sync pulse, termed EXT VSYNC, which is coupled via a line 326 to a clock 64 of the foreground generator illustrated in FIG. 5.

The sync separator 316 also produces an external horizontal sync signal, termed EXT HSYNC, which is coupled via a line 328 to a phase comparator 330 of a phase-locked loop (PLL) circuit 332. The PLL circuit 332 further includes a low pass filter 334 and a voltage controlled oscillator (VCO) 336.

The phase comparator 330 receives in addition to the XT HSYNC signal encoded on the video disc 302, a horizontal synchronization signal via the line 94 which is related to the system clock of the computer system 32. The comparator 330 compares both signals for frequency and phase differences and produces a difference signal on the line 338. The difference signal is filtered by the low pass filter 334 and coupled via a line 340 to the voltage controlled oscillator 336. In response to its input, the VCO 336 generates a signal termed EXT CLK which is coupled via a line 342 to a clock 42 of the computer system 32 illustrated in FIG. 4, where it is used to alter the system clock.

In operation, if the signal received by the phase comparator 330 via the line 94 is slower than that received via the line 328, the difference signal fed to the VCO 336 via the line 340 forces the VCO 336 to speed up, and vice versa. This eventually results in a phase lock between the signals received by the phase comparator 330 via the lines 94 and 328. Thus, the EXT CLK signal is adjusted such that the horizontal synchronization signal from the computer system 32 received by the phase comparator 330 via the line 94 is in synchronism with the horizontal synchronization signal received from the video disc via the line 328. So synchronized, the two video sources (the computer graphics generator 34 and the video disc 302) can have their respective pictorial data multiplexed by the multiplexor 322 for apparent simultaneous display on the monitor 14.

With continued reference to FIG. 2, the video frame number decoder 450 receives composite video from the video disc 302 via the line 304. For each frame, the decoder 450 decodes the pre-assigned frame number from pulses encoded during the vertical blanking interval. The coded data is in the form of a 24-bit Manchester-L code appearing as white directed pulses on various lines during the vertical blanking interval. The lines used are, in general, line numbers 16, 17, 18, 279, 280, and 281. The white directed pulses extend from E1A (IRE) level 0% (plus 5%, minus 0%) to E1A (IRE) level 100% (plus 0%, minus 5%), where 100% is the "white" level. The 24-bit Manchester code is decoded by the video frame number decoder 450 and stored in latches so that the computer system 32 can thereafter read the frame number.

Referring once again to FIG. 2, the video disc interface 300 further includes a serial interface 500. The interface 500 generates and transmits to the video disc player a coded signal which controls the functions performed on the video disc 302, for example, play, reverse, three times speed, search to frame, and so forth. The coded signal consists of a series of bursts of a carrier frequency, with the bursts separated by a specified duration of time that determines whether a "0" or a "1" is being transmitted.

For a Pioneer VP-1000 Laserdisc player, 25 control codes can be encoded using a serial 10-bit pulse code modulation (PCM) scheme. Each pulse burst consists of 10 pulses at 38 kHz and is approximately 0.263 milliseconds long. A 10-bit transmission starts and ends with a burst and therefore contains 11 bursts. The elapse time between bursts, termed the bit period, is either 1.05 milliseconds to indicate a logic "0" or 2.10 milliseconds to indicate a logic "1".

The serial interface 500 also generates the protocol necessary for the controller 30 to "communicate" with the video disc 302 via its video disc player.

Referring now to FIG. 3, the serial interface 500 includes a parallel to serial encoder chip 502 and a 38 kHz clock 504. A burst counter 512 counts ten bits or pulses at 38 kHz for each pulse burst, and a period counter 510 determines whether the bit period between successive pulse bursts is 1.05 or 2.10 milliseconds.

A bit counter 506 counts the 10-bit transmission which begins and ends with a pulse burst. A transmission gate 508 disables the counter 506 after the 10-bit transmission is completed and generates a ready flag.

A burst gate 514 gates the 10 cycles of 38 kHz to the video disc player via a line 518 after amplification by a tristate amplifier 516.

Referring once again to FIG. 2, the video game machine 10 includes the controller 30 having the computer system 32 and the state machine or computer graphics generator 34. The computer system 32 includes a stored program which provides input to the state machine 34. Once the state machine has the necessary input, it cycles through its various states to provide the multiplexor 322 with RGB signals via the line 93 without further control of the CPU (described below) until updated input is needed.

Referring now to FIG. 4, the computer system 32 includes a central processing unit (CPU) 40 such as an Intel 8088 microprocessor and associated clock circuitry 42, an address buss 44, and a data buss 46. The clock circuitry 42 is coupled via the line 342 to the VCO 336 illustrated in FIG. 2 or to a crystal clock selected by the microprocessor 40. The EXT CLK signal received by the clock 42 via the line 342 alters the system clock as previously described.

With continued reference to FIG. 4, the computer system 32 also includes program memory 48, such as random access memory (RAM) 48A and read only memory (ROM) 48B. A general purpose input-output circuit (GPIO) 50 is also included. The program memory 48 and the general purpose input-output circuit 50 are coupled to the CPU 40 via the address buss 44 and the data buss 46 in a routine manner.

The general purpose input-output circuitry 50 is responsive to the switches 20 and to the coin mechanism 22, and to the track ball 18 for inputing data to the CPU 40. The GPIO circuit 50 outputs signals for generating music, cabinet lighting effects, and so forth.

Additionally, the GPIO circuit 50 outputs on a line 518 a video disc status signal which essentially indicates whether composite video is being read from the disc 302. To determine this, the vertical sync signal from the video disc, EXT VSYNC, is monitored. If the EXT VSYNC signal is present, composite video is being received from the video disc 302; if this signal is not present, the video disc player is either searching or is not active.

Although not shown in the drawings, a watchdog timer is provided to reset the processor 40 unless it receives a pulse through the GPIO 50 at least every 256 miliseconds.

The state machine 34 includes a foreground generator 60 and a background generator 62. The foreground generator 60 generates a foreground video signal (FVS) corresponding to an image frame for the monitor 14 divided into a foreground grid of zones relatively large in number and small in size. The background generator 62 generates a background video signal (BVS) corresponding to an image frame for the monitor 14 divided into a background grid of zones relatively few in number and large in size. The background grid is non-overlapping, while the foreground grid can overlap.

As will be apparent, the background generator 62 is especially adapted for generating the relatively large, slower moving objects; hence the term background. Conversely, the foreground generator 60 is especially adapted for generating the objects which are to smoothly change position. Specifically, foreground objects can be positioned at any pixel location while background objects cannot. Background objects can only be generated at defined boundaries 8 pixels apart. Thus, the foreground generator is object-oriented and the background generator is character-oriented. However, if multiple background objects are used, then background can be made equivalent to foreground.

The foreground generator 60 and the background generator 62 are each responsive to a clock circuitry 64. The clock 64 receives via a line 602 a 5 MHz signal, termed HCLK, from a crystal oscillator or the EXT CLK signal from the VCO 336, and the INT VSYNC signal or the EXT VSYNC signal from the sync separator 316 via the line 326, respectively, as illustrated in greater detail in FIG. 5.

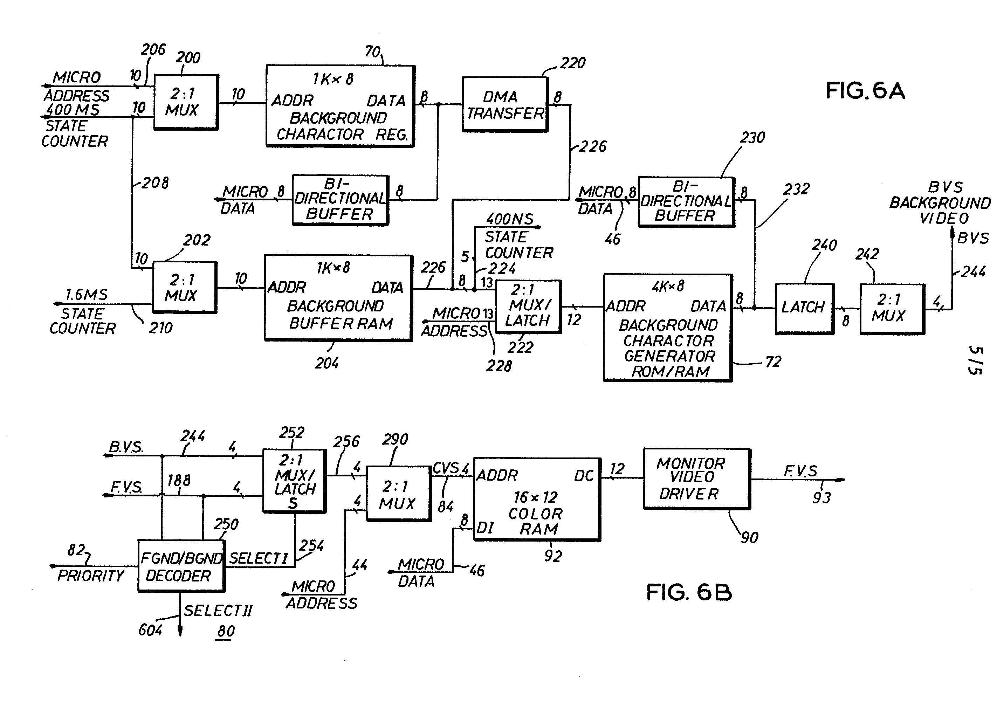

Referring now to FIG. 6, and in particular to FIG. 6B, the state machine 34 also includes a foreground/background dominance arbitor 80. In implementation, the arbitor 80 is a video summer; it selectively combines the FVS signal and the BVS signal from the generators 60, 62 to generate a combined video signal CVS.

The arbitor 80 is responsive to a priority signal on a line 82 from the computer system 32. The arbitor 80 combines the FVS and the BVS signals in a priority determined by the value of the priority signal on the line 82. Specifically, upon the occurrence of non-zero data in both the FVS signal and the BVS signal, the priority signal determines which of the BVS and FVS signals is to be transmitted.  In the absence of data in both the FVS and the BVS signals, a transparent color (as disclosed in the above referenced Yum patent application) or a videodisc image is chosen by the arbitor 80.

A foreground/background decoder 250 of the arbitor 80 produces a control signal SELECT I on a line 254 for selection between the FVS and the BVS signals.  The decoder 250 further produces a signal SELECT II on a line 604 which is coupled to the multiplexor 322.  The SELECT II signal controls the multiplexor 322 and controls whether the monitor 14 receives the RGB signals from the computer graphics generator 34, or the RGB signals from the color decoder 318.

During game play, the background video information from the video disc 302 is displayed on the monitor 14 as is the video generated by the computer graphics generator 34.  The SELECT II signal determines which video signal is displayed at any particular instant of time.  The remaining circuitry of FIGS. 4, 5 and 6 operates essentially as disclosed in the above referenced Yum patent application.

As previously indicated, any of a number of game themes can be employed using the invention hereof.  In one embodiment of the present invention, the game play program is encoded on the video disc 302, for example on one of the two audio channels included on the disc 302.  In this embodiment, the game play program is loaded into the RAM 48A and used by the computer system 32 to control game play.

Although rather specific embodiments of the invention have been described herein, it is to be understood that they have been by way of example. Numerous changes and modifications to the preferred embodiment described herein will be obvious to those of ordinary skill without departing from the spirit and scope of the invention as hereinafter claimed.

CLAIMS:

1.    A video game machine of the type having a stored program for generating an image of changing objects on a video monitor, and having player operated controls for controlling movement of at least one of said changing objects, said stored program defining a background grid of relatively large zones on the monitor and defining a foreground grid of relatively smaller zones on the monitor, characterized in that said video game machine comprises:

first means responsive to the stored program for generating foreground and background images on said monitor respectively to correspond to said foreground grid and to said background grid;

a video disc storage system having an addressable video disc containing information stored in a video-frame by video-frame format, each such video frame having composite video information including pictorial data and synchronization data; and

second means responsive to said stored program and to said pictorial data and said synchronization data for generating images on said monitor in synchronism with said foreground and background images.

2.    The video game machine according to Claim 1 further characterized in that said machine comprises:

means responsive to said synchronization data for generating external vertical and horizontal synchronization signals;

means for generating an internal clock signal;

means for comparing said internal clock signal and said external horizontal synchronization signal and for producing an error signal representative of phase and frequency differences between said internal clock signal and said external horizontal synchronization signal; and

means responsive to said error signal for varying the frequency and phase of said internal clock signal.

3. The video game machine according to Claim 1 further characterized in that:

said first means includes:

a foreground image generator for generating a foreground video signal corresponding to an image frame divided into the foreground grid of zones relatively large in number and small in size;

a background image generator for generating a background video signal corresponding to an image frame divided into the background grid of zones relatively few in number and large in size;

means for combining the background video signal and the foreground video signal in response to a priority signal for generating a combined video signal corresponding to a frame having the background and foreground grids overlayed such that one grid has priority over the other grid, the combined video signal having a value consisting of the sum of said foreground video signal and said background video signal when only one of said signals has a non-zero value and consisting of only one of the foreground video signal or the background video signal depending on the value of the priority signal when both of said signals have non-zero values;

a stored program controller for generating the priority signal; and

a video drive circuit responsive to the combined video signal for generating first red, blue and green color signals;

said second means includes color decoder means responsive to the pictorial data for generating second red, blue and green color signals; and

said video game machine further comprises means responsive to said stored program for combining said first and second red, blue and green color signals for generating third red, blue and green color signals to drive said video monitor.

4. The video game machine according to Claim 1 further characterized in that:

a stored game play program is contained on said video disc;

0133930

said video disc storage system includes means for
reading said stored game play program; and

said first means includes a random access memory
to receive and to store the game play
program read by the video disc storage
system.

START STROBE

PARALLEL TO SERIAL ENCODER  502

CLOCK  504

38 KHZ

AMP  518

516

DATA

506

BIT COUNTER MODULO 11

510

PERIOD COUNTER

TC

512

BURST COUNTER MODULO 10

CLK

514

BURST GATE

TRANSMISSION GATE

508

500

FIG.3

FIG.1

14
18
20
20
16
12
22
10

1/5

FIG. 2

FIG. 4

FIG. 5

4/5

FOREGROUND VIDEO

FIG.6A

FIG. 6B